(19) 
**Europäisches Patentamt**
**European Patent Office**
**Office européen des brevets**

(11) **EP 2 122 315 B1**

(12) # FASCICULE DE BREVET EUROPEEN

(45) Date de publication et mention de la délivrance du brevet:
**24.11.2010 Bulletin 2010/47**

(21) Numéro de dépôt: **08708834.0**

(22) Date de dépôt: **08.02.2008**

(51) Int Cl.:
**G01K 7/18** (2006.01)

(86) Numéro de dépôt international:
**PCT/EP2008/051566**

(87) Numéro de publication internationale:
**WO 2008/101821 (28.08.2008 Gazette 2008/35)**

(54) **PROCEDES DE FABRICATION D'UN CAPTEUR DE TEMPERATURE PAR CONTACT ET PROCEDE D'ETALONNAGE DE CE CAPTEUR**

VERFAHREN ZUR HERSTELLUNG EINES KONTAKTTEMPERATURSENSORS UND VERFAHREN ZUM KALIBRIEREN DES SENSORS

METHODS FOR MAKING A CONTACT TEMPERATURE SENSOR AND METHOD FOR CALIBRATING SAID SENSOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.02.2007 FR 0753191**

(43) Date de publication de la demande:
**25.11.2009 Bulletin 2009/48**

(73) Titulaire: **Commissariat à l'Énergie Atomique et aux Énergies Alternatives
75015 Paris (FR)**

(72) Inventeurs:
• **LORRETTE, Christophe**
**F-33140 Villeneuve D'Ornon (FR)**
• **PAILLER, René**
**F-33610 Cestas (FR)**
• **GOYHENECHE, Jean-Marc**
**F-33600 Pessac (FR)**

• **BATSALE, Jean-Christophe**
**F-33410 Beguey (FR)**

(74) Mandataire: **Ilgart, Jean-Christophe et al
BREVALEX
3, rue du Docteur Lancereaux
75008 Paris (FR)**

(56) Documents cités:
**JP-A- 5 248 964**

• **LORRETTE ET AL: "Deposition and characterization of hex-BN coating on carbon fibres using tris(dimethylamino)borane precursor" JOURNAL OF THE EUROPEAN CERAMIC SOCIETY, ELSEVIER SCIENCE PUBLISHERS, BARKING, ESSEX, GB, vol. 27, no. 7, 9 février 2007 (2007-02-09), pages 2737-2743, XP005876310 ISSN: 0955-2219 cité dans la demande**

EP 2 122 315 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

L'invention concerne des procédés de fabrication d'un capteur de température par contact permettant de mesurer la température d'un matériau, un procédé d'étalonnage d'un tel capteur et un procédé d'utilisation de ce capteur.

## ÉTAT DE LA TECHNIQUE ANTÉRIEURE

Il est important de pouvoir mesurer de manière précise la température d'un milieu (solide, liquide ou fluide).

Les principaux appareils de mesure de la température sont les suivants :

- les thermomètres à dilatation de gaz,
- les thermomètres à tension de vapeur,
- les thermomètres à dilatation de liquide,
- les thermomètres à dilatation de solide,
- les thermistances,
- les thermomètres à résistance métallique de platine, nickel ou cuivre,
- les thermomètres à résistance de germanium ou de carbone,
- les couples thermoélectriques,
- les pyromètres optiques.

Dans les thermomètres à dilatation de gaz, la température est déduite d'une variation de volume ou de pression d'une masse de gaz donnée.

Dans les thermomètres à tension de vapeur, la température est déduite d'une variation de la pression de vapeur saturante d'un liquide, qui est indépendante des volumes occupés par le liquide et la vapeur (bulbe contenant un liquide en équilibre avec sa vapeur).

Dans les thermomètres à dilatation de liquide, la température est déduite d'une variation de volume du liquide. En pratique, on mesure la différence de dilatation entre le liquide et son enveloppe.

Dans les thermomètres à dilatation de solide, la température est déduite d'une variation de longueur d'un solide. En pratique, on mesure la différence d'allongement entre la tige et le support ou entre deux lames soudées de nature différente (bilame).

Dans les thermistances, la température est déduite d'une variation de la résistance électrique d'un corps semi-conducteur.

Dans les thermomètres à résistance métallique de platine, nickel ou cuivre, la température est déduite d'une variation de la résistance électrique d'un corps conducteur métallique.

Dans les thermomètres à résistance de germanium ou de carbone, la température est déduite d'une variation de la résistance électrique d'un corps conducteur non métallique.

Dans les couples thermoélectriques, la température est déduite dé la force électromotrice générée dans un circuit comportant deux conducteurs de nature différente.

Dans les pyromètres optiques, la température est déduite du rayonnement infrarouge émis par le milieu.

Le domaine de température propre à chaque thermomètre est limité.

Beaucoup de thermomètres fonctionnent entre -100°C et 200°C, mais plus on s'éloigne de cette plage de température et plus le choix est restreint (voir le document **[1]**).

Pour une température allant de 500 à 800°C, les couples thermoélectriques sont les appareils de mesure les mieux adaptés, alors que les pyromètres offrent de grandes facilités dans le contrôle industriel en continu de la température.

Au-delà de 800°C, les pyromètres optiques doivent être privilégiés, bien que des couples thermoélectriques à base de métaux précieux puissent être utilisés jusqu'à 1500°C. L'utilisation de couples de métaux réfractaires, possible en pratique jusqu'à 2400°C, pose de sérieux problèmes de maintenance et de sécurité d'emploi.

Typiquement, l'utilisation des thermomètres basés sur la relation entre la résistance électrique et la température (les thermomètres à résistance métallique de platine, nickel ou cuivre et les thermomètres à résistance de germanium ou de carbone) ne dépasse pas 1000°C. Pour les thermomètres à résistance de germanium ou de carbone en particulier, le domaine d'emploi est guidé par la facilité de mesure aux basses températures et l'inconvénient de la sensibilité aux cycles thermiques du germanium ou du carbone pour les hautes températures. Ainsi, typiquement, le domaine d'emploi d'un thermomètre au carbone s'étend de 0,05 K à 300 K, c'est-à-dire de - 273°C à 27°C (voir le document **[2]**).

Concrètement, une mesure fiable de la température au-delà de 1500°C ne peut être réalisée que par pyrométrie optique, sans contact avec le milieu dont on souhaite connaître la température. En effet, si certains couples thermoélectriques à base de métaux précieux peuvent encore être employés pour des mesures par contact à ces niveaux de température, leur prix très élevé, leur étalonnage incertain et leur dérive en fonction de l'atmosphère et de la nature du milieu les rendent difficilement utilisable. Or, les inconvénients de la mesure pyrométrique sont, d'une part, sa limitation aux températures de surface et, d'autre part, sa calibration qui doit prendre en compte l'émissivité du corps visé et la transmittivité du milieu intermédiaire (gaz, fumées, hublots, ...) traversé par le flux radiatif détecté.

JP 5 248 964 décrit un capteur de température comprenant une fibre de carbone comme élément sensible. La plage de mesure décrite est 50 - 500 K.

L'objet de l'invention est de proposer un capteur de température par contact capable de mesurer la température d'un milieu pouvant avoir une température allant jusqu'à 800°C et au-delà.

Par ailleurs, on sait, par les travaux de C. Lorette et al. (voir le document **[3]**), qu'il est possible de recouvrir une fibre de carbone par une couche de nitrure de bore hexagonal par dépôt chimique en phase vapeur sous pression réduite (LPCVD).

## EXPOSÉ DE L'INVENTION

Ce but est atteint par un procédé de fabrication d'un capteur de température par contact destiné à être utilisé à une température d'utilisation $T_U$, ledit capteur pouvant résister à une température supérieure à 800°C, le procédé comprenant les étapes suivantes :

- fourniture d'une fibre de carbone de longueur L et de diamètre micrométrique,
- traitement thermique de la fibre à une température $T_1$ supérieure à 800°C et supérieure à la température $T_U$ d'utilisation du capteur,
- dépôt pleine couche sur la fibre, à une température de dépôt $T_D$, d'une couche de revêtement en matériau céramique électriquement isolant et stable à la température d'utilisation $T_U$ du capteur, le matériau céramique étant choisi parmi la silice ($SiO_2$), le zircone ($ZrO_2$) et l'alumine ($Al_2O_3$),
- traitement thermique de la fibre, revêtue de la couche de revêtement, à une température $T_2$ supérieure à la température de dépôt $T_D$ de la couche de revêtement et supérieures à la température d'utilisation du capteur.

Avantageusement, la température $T_1$ et la température $T_2$ sont supérieures à une température $T_E$ dite « température limite d'étalonnage », ladite température limite d'étalonnage $T_E$ étant supérieure à la température $T_U$ d'utilisation du capteur.

Avantageusement, la température $T_1$ est supérieure à la température $T_2$.

Dans ce procédé de fabrication, le matériau céramique est choisi parmi la silice ($SiO_2$), le zircone ($ZrO_2$) ou l'alumine ($Al_2O_3$). Le choix du matériau se fait en fonction de la température d'utilisation du capteur (et éventuellement de la température limite d'étalonnage du capteur, si le capteur doit être étalonné) et de la température de fusion du matériau céramique, car le matériau doit pouvoir supporter cette température d'utilisation (et éventuellement cette température d'étalonnage). Le matériau céramique choisi a une conductivité électrique faible de sorte que la résistance électrique du matériau une fois déposé sur la fibre est suffisante (c'est-à-dire suffisamment grande par rapport à celle de la fibre) pour que la fibre de carbone puisse être considérée comme étant électriquement isolée.

L'invention concerne également un procédé de fabrication d'un capteur de température par contact destiné à être utilisé à une température d'utilisation $T_U$, ledit capteur pouvant résister à une température supérieure à 800°C, le procédé comprenant les étapes suivantes :

- fourniture d'une fibre de carbone de longueur L et de diamètre micrométrique,
- traitement thermique de la fibre à une température $T_1$ supérieure à 800°C et supérieure à la température $T_U$ d'utilisation du capteur,
- dépôt pleine couche sur la fibre, à une température de dépôt $T_{D1}$, d'une première couche de revêtement en carbure de silicium,
- dépôt pleine couche sur la première couche de revêtement, à une température de dépôt $T_{D2}$, d'une seconde couche de revêtement en nitrure de bore,
- traitement thermique de la fibre ainsi obtenue à une température $T_2$ supérieure aux températures de dépôts $T_{D1}$ et $T_{D2}$ et à la température d'utilisation $T_U$ du capteur.

Avantageusement, la température $T_1$ et la température $T_2$ sont supérieures à une température $T_E$ dite « température limite d'étalonnage », ladite température limite d'étalonnage $T_E$ étant supérieure à la température $T_U$ d'utilisation du capteur.

Avantageusement, la température $T_1$ est supérieure à la température $T_2$.

Il est à noter que dans les deux procédés de fabrication ci-dessus, le dépôt pleine couche peut être réalisé par dépôt chimique en phase vapeur (CVD) et la fibre de carbone peut être une fibre de type XN05.

Le capteur de température, lorsqu'il est étalonné (par exemple selon le procédé d'étalonnage décrit cidessous), peut être utilisé pour mesurer avec précision des températures.

Le capteur de température ainsi réalisé peut être utilisé pour mesurer une variation de températures.

Le capteur selon l'invention peut être utilisé à des températures inférieures à 800°C, mais l'avantage de ce capteur par rapport aux capteurs de température par contact de l'art antérieur est qu'il permet de mesurer des températures allant au-delà de 800°C.

Un autre avantage du capteur selon l'invention est qu'il permet de mesurer la température au sein d'un milieu solide, liquide ou gazeux, ledit milieu pouvant avoir une température supérieure à 800°C. Le capteur a également l'avantage d'être réutilisable de nombreuses fois.

L'invention concerne également un procédé d'étalonnage du capteur obtenu selon l'un ou l'autre des procédés de fabrication mentionnés ci-dessus. Ce procédé d'étalonnage comprend le chauffage uniforme du capteur selon une rampe de température par passage d'un courant électrique dans la fibre du capteur jusqu'à atteindre une température limite d'étalonnage $T_E$, et la mesure simultanée de la température et de la résistance de la fibre du capteur à l'aide de moyens de mesure de manière à déterminer la fonction d'étalonnage $F_E$ reliant la température $T_C(K)$ du capteur à sa résistance électrique $R_C(\Omega)$ selon la formule $R_C(\Omega) = F_E.T_C(K)$, la température d'étalonnage $T_E$ étant supérieure à la température d'utilisation du capteur et inférieure aux températures de traitement thermique $T_1$ et $T_2$.

Le chauffage uniforme de la fibre s'obtient en chauffant de manière lente et progressive.

L'invention concerne aussi un procédé de mesure de la température d'un matériau à tester à l'aide d'un capteur de température par contact obtenu selon l'un ou l'autre des procédés de fabrication décrits ci-dessus. Ce procédé de mesure comprend la mise en contact de la fibre du capteur avec une surface du matériau à tester, le chauffage de la fibre du capteur par l'intermédiaire dudit matériau à tester avec lequel la fibre est en contact (propagation de la chaleur du matériau vers la fibre) et la mesure de la résistance $R_C$ de la fibre pour en déduire sa température $T_C$ via la fonction d'étalonnage $F_E$ du capteur déterminée selon le procédé d'étalonnage décrit ci-dessus.

Enfin, l'invention concerne un élément constitué d'un matériau solide, **caractérisé en ce qu'**il incorpore un capteur obtenu selon l'un ou l'autre des procédés de fabrication décrits ci-dessus, les extrémités du capteur étant accessibles de l'extérieur de l'élément de manière à pouvoir connecter le capteur à une source d'alimentation électrique. Ainsi, le capteur est intégré dans le matériau et il peut mesurer la température du matériau. Le capteur peut avoir été étalonné, par exemple selon le procédé d'étalonnage décrit ci-dessus, avant d'être incorporé dans le matériau.

**BRÈVE DESCRIPTION DES DESSINS**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est un schéma de principe du capteur et de ses moyens de préhension,
- la figure 2 représente la variation de l'épaisseur d'une couche de dépôt en fonction de la durée d'exposition de la fibre du capteur selon l'invention,
- la figure 3 représente un graphique de la résistance d'un capteur selon l'invention en fonction de la température,
- la figure 4 représente un graphique de la température mesurée à l'aide d'un capteur selon l'invention en fonction de la température mesurée, au même endroit, à l'aide d'un couple thermoélectrique.

**EXPOSÉ DÉTAILLÉ DE MODES DE RÉALISATION PARTICULIERS**

Le capteur selon l'invention comprend une fibre de carbone de diamètre micrométrique (le diamètre est compris entre quelques micromètres et plusieurs dizaines de micromètres) et de longueur millimétrique. La dimension transverse extrêmement réduite de la fibre conduit à obtenir, d'une part, une température uniforme dans la section du capteur et d'autre part, des temps de réponse estimés à quelques microsecondes (le temps de réponse est obtenu selon la formule suivante : $t \approx 3.\rho.c_p.R^2/\lambda$, ce qui donne des temps de réponse de l'ordre de quelques microsecondes pour une conductivité thermique $\lambda$ d'environ 80 $W.m^{-1}.K^{-1}$, une masse volumique $\rho$ d'environ 2000 $kg.m^3$, une capacité thermique $c_p$ d'environ 2200 $J.kg^{-1}.K^{-1}$ et un rayon de fibre R d'environ 5 $\mu$m).

Pour mesurer la température à partir du capteur selon l'invention, on place la fibre en contact avec le milieu (liquide, solide, gazeux) à mesurer, on mesure la variation de résistance électrique dans la fibre et à partir de cette mesure, on déduit la température moyenne de la fibre grâce à un étalonnage température/résistance réalisé au préalable. Comme la température de la fibre est supposée être identique à celle du milieu au contact duquel elle est placée, on obtient ainsi la température du milieu.

Contrairement aux capteurs de l'art antérieur, le capteur selon l'invention peut être utilisé pour mesurer des matériaux à des températures supérieures à 800°C, et même à de très hautes températures (allant au-delà de 1500°C). En effet, grâce au traitement thermique de la fibre de carbone, on supprime la sensibilité de la fibre aux cycles thermiques du carbone pour les hautes températures.

Nous allons détailler ci-dessous le procédé de fabrication d'un capteur de température selon l'invention, comprenant une fibre de carbone recouverte d'une couche en carbure de silicium et d'une couche de nitrure de bore.

La qualité du capteur obtenu dépend (i) de sa stabilité thermochimique, (ii) de son isolation électrique dans le cas d'une mesure au sein d'un milieu conducteur (solide, liquide ou gaz), (iii) de la résistance mécanique de la fibre qui garantit la solidité du capteur et (iv) de la sensibilité de la résistance électrique de la fibre à la température. Ces quatre critères conditionnent le procédé de fabrication.

Le procédé de fabrication du capteur comprend plusieurs étapes.

La première étape consiste à choisir une fibre de carbone qui, une fois traitée thermiquement, de préférence à très haute température, présente à la fois des propriétés mécaniques convenables et une sensibilité importante de sa résistivité électrique à la température.

Pour la réalisation du capteur, nous avons choisi d'utiliser une fibre XN05. C'est une fibre de carbone ex-brai isotrope produite par Nippon Graphite Fiber, ayant un diamètre moyen de 10 $\mu$m.

La deuxième étape consiste à découper la fibre à la longueur L, puis à lui associer de préférence un dispositif de préhension, en matériau électriquement conducteur ou simplement recouvert d'un matériau électriquement conducteur, qui permettra d'une part de manipuler facilement le capteur et d'autre part de réaliser simplement les connexions électriques. Il est souhaitable que la fibre soit rendue définitivement solidaire de ce dispositif de préhension. La fibre peut être fixée sur le dispositif de préhension au niveau de ses extrémités à l'aide de colle carbone. Les extrémités du capteur peuvent par exemple être fixées à des mors sur lesquels seront réalisées les connexions électriques.

Le choix de la longueur L de la fibre est déterminant puisqu'il fixe à la fois la dimension du capteur, c'est-à-dire l'étendue géométrique concernée par la mesure de température, mais également sa résistance électrique $R_C$ définie par la relation suivante :

$$R_C = \rho_{EC} \frac{L}{S}$$

où $\rho_{EC}$ ($\Omega.m$) représente la résistivité électrique de la fibre et S ($m^2$) sa section.

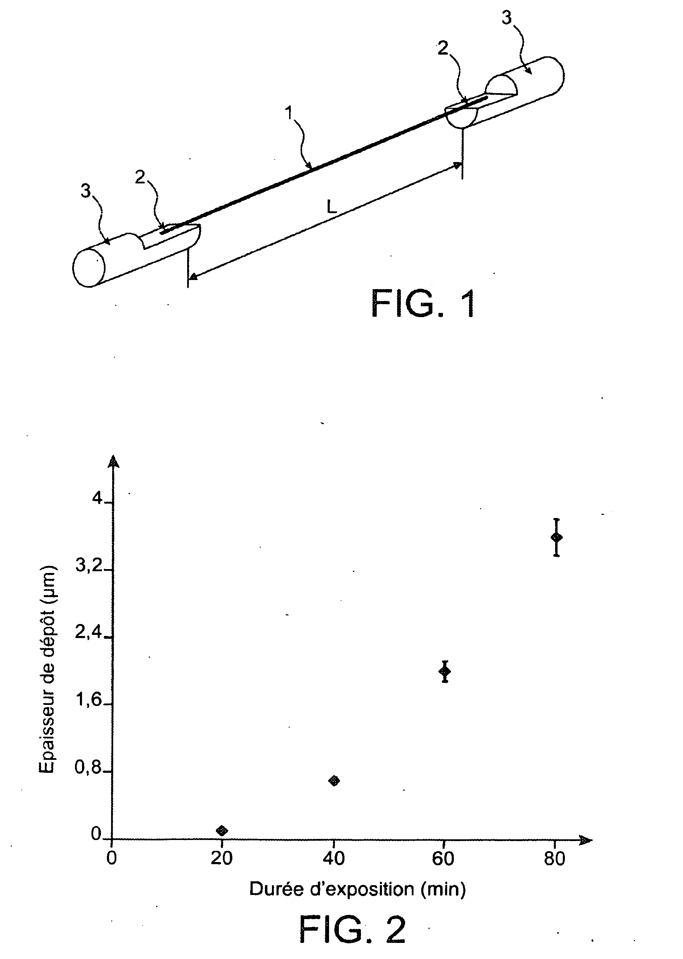

Dans cet exemple de réalisation, nous avons choisi une longueur L de l'ordre de 50 mm et des dispositifs de préhension constitués par deux mors en carbone. Un schéma du montage est présenté à la figure 1 : le capteur 1 de longueur L a ses extrémités 2 qui sont collées sur deux mors 3, les mors 3 facilitant la préhension du capteur et servant de connexions électriques au capteur.

La troisième étape consiste à traiter thermiquement la fibre à une température $T_1$, supérieure à la température d'utilisation $T_U$ du capteur, supérieure à la température limite d'étalonnage $T_E$ et supérieure à la température d'élaboration $T_F$ de la fibre (c'est-à-dire supérieure à toutes les températures qui lui seront imposées par la suite), afin de garantir sa stabilité thermochimique. La fibre choisie pour l'élaboration de notre capteur a subi, lors de sa fabrication, un traitement thermique de quelques minutes à $T_F$=800°C (données du fabricant). Nous choisissons donc de stabiliser thermiquement la fibre à une température $T_1$ supérieure aux températures $T_E$, $T_U$ et $T_F$, par exemple à $T_1$=2200°C.

La quatrième étape consiste à réaliser un dépôt isolant électrique sur la fibre. Pour la fabrication du capteur, nous avons choisi d'utiliser le nitrure de bore (BN), car c'est un bon conducteur thermique (conductivité thermique de l'ordre de 60 W.m$^{-1}$.K$^{-1}$ dans la direction parallèle aux feuillets et de l'ordre de 2 W.m$^{-1}$.K$^{-1}$ dans la direction perpendiculaire aux feuillets pour une couche de nitrure de bore cristallisé sous forme de feuillets), un mauvais conducteur électrique (résistivité électrique de l'ordre de 10$^8$ $\Omega$.m dans la direction parallèle aux feuillets et de l'ordre de 10$^6$ $\Omega$.m dans la direction perpendiculaire aux feuillets pour une couche de nitrure de bore cristallisé sous forme de feuillets) et il est stable à très haute température (sa température de fusion est située autour de 2600-2800°C).

D'autres- types de dépôts peuvent également être envisagés, du moment qu'ils satisfont à ces deux dernières conditions. S'il demeure souhaitable, le caractère de bon conducteur thermique n'est pas indispensable car le diamètre du capteur est petit (une dizaine de micromètres) par rapport aux variations spatiales de température à mesurer.

Le choix du type de dépôt est également lié à son éventuelle interaction avec le carbone de la fibre. Pour pallier cet inconvénient dans le cas d'un dépôt de nitrure de bore, on intercale une couche de carbure de silicium (SiC) entre la fibre de carbone et la couche de nitrure de bore afin, d'une part, d'empêcher la diffusion du carbone dans la couche de nitrure de bore et d'autre part, d'empêcher la réaction NH$_3$+C→HCN+CH$_4$ de se produire car elle dégraderait la fibre lors du dépôt du nitrure de bore.

Le phénomène de diffusion du carbone dans la couche de nitrure de bore est irréversible et est favorisé par un niveau de température élevé. Cette diffusion du carbone conduit à dégrader les propriétés d'isolation électrique du dépôt de nitrure de bore.

Il est particulièrement important de protéger les fibres de la réaction NH$_3$+C→HCN+CH$_4$ si elles ont une texture désordonnée. Dans le cas de la fibre XN05 traitée à $T_1$=2200°C, ce phénomène est très peu présent. Par conséquent, il n'est pas nécessaire de déposer du carbure de silicium pour protéger le carbone de la fibre de la réaction NH$_3$+C→HCN+CH$_4$. Seul le niveau de température d'utilisation du capteur sera déterminant pour savoir si une couche de carbure de silicium est nécessaire ou pas.

Le dépôt isolant à la surface de la fibre peut être réalisé à partir d'un précurseur liquide par la technique de dépôt chimique en phase vapeur, suivant des conditions de température, pression, débit et durée d'exposition définies en fonction de la nature du revêtement et du dispositif expérimental. Pour les fibres de carbone revêtues de carbure de silicium et de nitrure de bore, nous avons utilisé les conditions suivantes :

Dépôt de carbure de silicium :

  Précurseur : tétraméthylsilane (TMS)
  Réactif : hydrogène (H$_2$)
  Vecteur : hydrogène (H$_2$)
  Température de dépôt ($T_D$) : 1100°C
  Pression : 0,3 bar
  Débit TMS : 100 sccm
  Débit H$_2$ : 8 sccm
  Durée : 15 minutes pour obtenir une épaisseur de dépôt de 500 nm environ.

Dépôt de nitrure de bore :

  Précurseur : tridimethylaminoborane (TDMAB)

Réactif : ammoniac ($NH_3$)
Vecteur : hydrogène ($H_2$)
Température ($T_D$) : 1300°C
Pression : 0,3 bar
Débit $NH_3$ : 100 sccm
Débit $H_2$ : 15 sccm
Durée : ajustable en fonction de l'épaisseur de dépôt souhaitée.

Sur la figure 2, nous avons représenté un graphique illustrant l'épaisseur de dépôt obtenue en fonction de la durée d'exposition. On peut voir que plus le temps de dépôt est long, et plus l'épaisseur de la couche de dépôt est élevée.

Dans cet exemple de réalisation, nous avons déposé une couche de carbure de silicium ayant une épaisseur inférieure à 500 nm, puis une couche de nitrure de bore ayant une épaisseur comprise entre 500 et 2500 nm. L'épaisseur de la couche de nitrure de bore est choisie de manière à garantir une bonne isolation électrique de la fibre.

Dans cet exemple, nous avons utilisé une fibre type XN05 et un dépôt de SiC et un dépôt de BN. Il est bien entendu que d'autres types de fibres de carbone et d'autres natures de dépôt céramique peuvent être envisagés. Ainsi, comme décrit dans cette demande, le capteur peut être une fibre de carbone recouverte d'une couche de revêtement en matériau céramique électriquement isolant et stable à la température d'utilisation Tu du capteur, le matériau céramique étant choisi parmi la silice ($SiO_2$), le zircone ($ZrO_2$) et l'alumine ($Al_2O_3$).

La cinquième étape dans la fabrication du capteur consiste à traiter thermiquement l'ensemble constitué par la fibre et le dépôt isolant jusqu'à une température supérieure à la température d'étalonnage. Dans cet exemple de réalisation, nous avons stabilisé thermiquement le capteur en le chauffant à une température $T_2$=1800°C.

Comme nous venons de le voir, des niveaux de température déterminants doivent être pris en compte lors de l'élaboration du capteur :

- la température d'élaboration de la fibre de carbone $T_F$, fixée par le fabricant et variable suivant les matériaux. En pratique, il est toujours très difficile de connaître avec précision le traitement thermique qu'a subi une fibre (niveau de température, durée) lors de son élaboration, cette information étant confidentielle pour le fabricant. C'est la raison pour laquelle il est préférable de réaliser un traitement thermique de la fibre de carbone avant de l'utiliser à haute température ;
- la température d'utilisation $T_U$ atteinte lors de l'utilisation du capteur ;
- la température atteinte lors de l'étalonnage du capteur $T_E$. Par définition, cette température doit être supérieure à la température d'utilisation, c'est-à-dire $T_E>T_U$.

Il faut également considérer la température $T_D$ atteinte par la fibre de carbone lors du dépôt de l'isolant électrique. La température de dépôt dépendra du matériau déposé.

Par conséquent,

- pour garantir la stabilité thermochimique de la fibre lors du dépôt d'un revêtement isolant sur ladite fibre de carbone, la fibre doit être préalablement traitée à une température $T_1$ supérieure à la température de dépôt du revêtement : $T_1>T_D$ ;
- pour garantir la stabilité thermochimique du capteur, le capteur doit être traité à une température $T_2$ supérieure à la température d'étalonnage : $T_2>T_E$ ;
- pour prévenir d'éventuels effets thermomécaniques entre la fibre et le dépôt d'un revêtement isolant lors des montées en température, il est souhaitable que la température $T_1$ soit supérieure à la température $T_2$ : $T_1>T_2$.

On obtient donc la relation suivante : $T_1>T_2>T_E>T_U$.

Dans le cas d'une mesure de température au contact d'un matériau échantillon conducteur électrique, la fabrication du capteur consiste tout d'abord à réaliser un traitement thermique de la fibre de carbone à la température $T_1$ pour s'assurer de sa stabilité, puis à la revêtir d'un dépôt isolant électrique, et enfin à réaliser un deuxième traitement thermique à la température $T_2$ afin de garantir la stabilité de l'ensemble constitué de la fibre et de la couche d'isolant.

Les traitements thermiques du capteur lors de sa formation sont réalisés, à très haute température, en chauffant par effet Joule la fibre ou la fibre revêtue d'isolant du capteur, tout en contrôlant simultanément sa température à l'aide d'un pyromètre bichromatique. Le chauffage par effet Joule est obtenu en connectant le capteur (fibre ou fibre revêtue de dépôt isolant) à une alimentation en courant électrique. Lors des traitements thermique du capteur, le capteur est placé sous vide secondaire (par exemple à une pression de $10^{-5}$ à $10^{-8}$ mbar) afin d'éviter son oxydation. L'étalonnage du capteur réalisé à très haute température se fait également par chauffage par effet Joule.

Les traitements thermiques du capteur sont réalisés, à haute température, par chauffage de la fibre dans un four résistif.

Le dépôt de carbure de silicium est réalisé par la technique de dépôt chimique en phase vapeur. Pour cela, le TMS, précurseur liquide retenu, est vaporisé à température ambiante, puis entraîné jusqu'à l'enceinte de dépôt sous atmosphère contrôlée de $H_2$. La stoechiométrie du SiC déposé est ajustable en modifiant les débits de TMS et de $H_2$. Pendant le dépôt CVD, la fibre est chauffée par effet Joule afin de garantir un dépôt uniforme du carbure de silicium sur toute la surface de la fibre.

Le dépôt de nitrure de bore est réalisé par la technique de dépôt chimique en phase vapeur. Pour cela, le TDMAB, précurseur liquide retenu, est vaporisé à 35°C puis entraîné par $H_2$ jusqu'à l'enceinte de dépôt CVD dans laquelle il est mélangé à $NH_3$. Le $NH_3$ permet d'assurer la stoechiométrie du nitrure de bore déposé. Comme précédemment, le chauffage par effet Joule localisé sur la fibre garantit un dépôt uniforme tout au long du capteur.

Une fois réalisé, le capteur peut être étalonné. Pour cela, on détermine expérimentalement la fonction $F_E$ reliant la température $T_C$(K) du capteur à sa résistance électrique $R_C$(Ω) selon la relation suivante, $R_C = F_E(T_C)$, en chauffant lentement le capteur de manière uniforme (selon une rampe de température) et en mesurant simultanément sa température $T_C$ et sa résistance électrique $R_C$. Il est important que la température du capteur (et en particulier de la fibre) soit uniforme, sous peine non seulement d'entraîner une variation de la résistance électrique $R_C$ le long de la fibre et finalement de dégrader l'incertitude de la mesure.

L'étalonnage du capteur est obtenu en chauffant progressivement le capteur par effet Joule de manière uniforme (rampe de température), sous vide secondaire ou sous balayage de gaz neutre, et en mesurant simultanément sa température de surface $T_C$ et sa résistance électrique $R_C$. La résistivité électrique de la fibre de carbone étant relativement élevée, la conductivité thermique du capteur ne dépasse généralement pas quelques dizaines de $W.m^{-1}.K^{-1}$. En conséquence, le profil de température le long du capteur est uniforme et la résistance électrique peut être mesurée sans prendre de précautions particulières, en se raccordant simplement à ses extrémités.

Etant donné que la température de surface est mesurée avec des moyens de mesure plus ou moins performants selon la gamme de température, le procédé d'étalonnage doit être adapté en fonction du domaine de température visé, afin de raccorder l'expérience à la référence de température la plus fiable, en prenant en compte les contraintes économiques et technologiques du laboratoire. Ainsi, on distingue :

- l'étalonnage à haute température de 20°C à 800-1500°C pour lequel il est souhaitable d'utiliser un couple thermoélectrique comme moyen de mesure de la température de surface du capteur et
- l'étalonnage à très haute température, c'est-à-dire pour un température allant au-delà de 1500°C, pour lequel il est souhaitable d'utiliser un pyromètre optique comme moyen de mesure de la température de surface du capteur.

En pratique, si la température d'étalonnage est inférieure à 1000°C, on effectuera un étalonnage en utilisant un couple thermoélectrique et si la température d'étalonnage est supérieure à 1000°C, on utilisera un pyromètre optique.

Pour un étalonnage à haute température (inférieure à 1000°C), le capteur est disposé entre deux blocs de matériau ayant une grande conductivité thermique et étant stable jusqu'à la température d'étalonnage $T_E$. Comme les blocs sont de bons conducteurs thermiques, ils sont par conséquent quasiment isothermes et vont chauffer le capteur de manière uniforme. Le capteur peut par exemple être maintenu entre deux blocs de carbone.

Un couple thermoélectrique est inséré dans l'un des deux massifs et mesure la température du bloc. Comme le massif est un bon conducteur (plusieurs dizaines de $W.m^{-1}.K^{-1}$), sa température sera uniforme et peu différente de celle du capteur. L'ensemble est placé dans un four sous vide secondaire (pression de $10^{-5}$ à $10^{-8}$ mbar) ou sous balayage de gaz inerte. L'opération d'étalonnage consiste alors à relever la résistance électrique $R_C$ du capteur pour chaque valeur de température $T_C$ indiquée par le couple thermoélectrique. On en déduit la fonction d'étalonnage $F_E$ du capteur.

L'étalonnage du capteur présuppose que le champ de température est uniforme sur la fibre, afin de garantir une résistance électrique constante le long de la fibre. On peut ainsi réaliser un étalonnage du capteur de 20°C à 1000°C.

Pour un étalonnage à très haute température (supérieure à 1500°C et en pratique, également pour une température supérieure à 1000°C)), le capteur est chauffé par effet Joule, en utilisant le même montage que celui utilisé pour la fabrication du capteur (voir ci-dessus), et sa résistance électrique $R_C$ est relevée pour chaque valeur de température $T_C$ indiquée par le pyromètre optique. On en déduit la fonction d'étalonnage $F_E$ du capteur.

Il est également possible d'obtenir un étalonnage approché pour une gamme de température inférieure à la température minimale pouvant être mesurée par le pyromètre. En effet, à chaque température $T_C$, l'équilibre thermique du capteur est établi en considérant d'une part la source de chaleur due à l'effet Joule dans la fibre et d'autre part les pertes radiatives à la surface du capteur, ce dernier étant quasiment isotherme. Une formulation analytique du problème thermique conduit alors à une relation linéaire entre $\sigma_B T_C^4$ (où $\sigma_B = 5,67.10^{-8}$ $W.m^{-1}.K^{-4}$ est la constante de Boltzman) et $P_C = R_C I_C^2$ (où $I_C$ est le courant dans la fibre). Cette relation, définie dans la gamme de fonctionnement du pyromètre, peut être extrapolée pour des températures $T_C$ inférieures. On en déduit alors directement une fonction d'étalonnage $F_E$. On peut ainsi réaliser un étalonnage du capteur de 225°C à 1525°C par exemple.

Une fois qu'il a été étalonné, le capteur peut être utilisé pour mesurer la température de matériaux. Pour cela, on mesure la résistance $R_C$ du capteur pour en déduire sa température $T_C$ via sa fonction d'étalonnage $F_E$. Comme lors de l'étalonnage, il est important que, lors de l'utilisation du capteur, le capteur ait une température uniforme, sous peine d'entraîner une variation de la résistance électrique $R_C$ le long du capteur et finalement de dégrader l'incertitude de mesure.

La stabilité d'un capteur selon l'invention, constitué d'une fibre de XN05 recouverte d'une couche de nitrure de bore, a été testée en plaçant le capteur entre deux blocs de carbone dans un four et en mesurant la température à l'aide d'un couple thermoélectrique (principe de l'étalonnage à haute température (inférieure à 1000°C)). L'expérience a été réalisée sur un capteur XN05/BN car le niveau de température atteint n'était pas suffisamment haut pour risquer une dégradation de l'isolation électrique due à la diffusion du carbone dans le nitrure de bore.

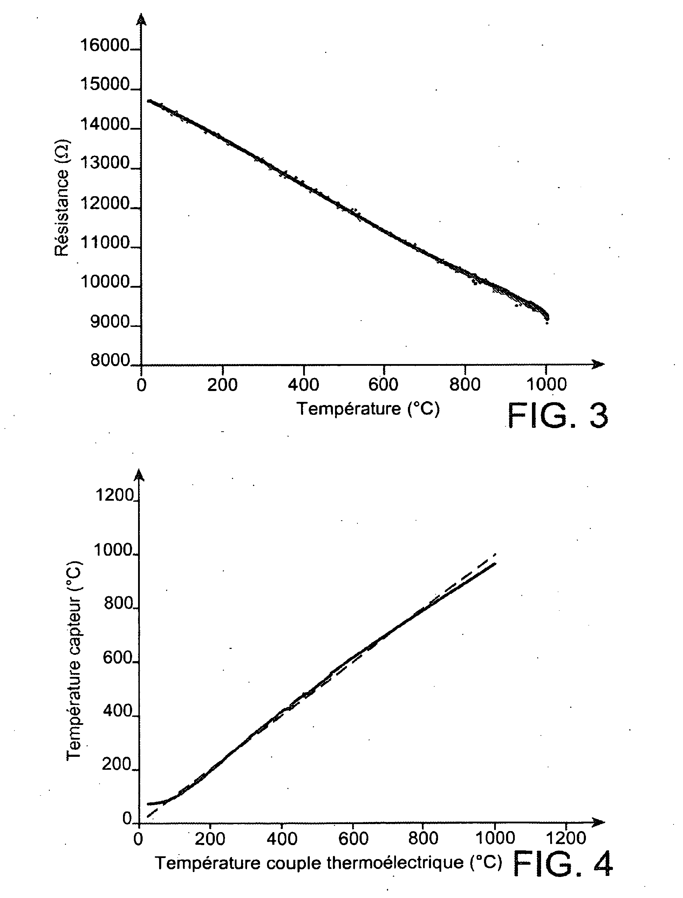

Les résultats du test sont illustrés dans la figure 3 sur laquelle sont reportées trois séries de mesures de la résistance électrique en fonction de la température, de 20°C à 1000°C. Les résultats obtenus montrent la répétitivité de la mesure.

Selon un autre exemple, un capteur constitué d'une fibre XN05 recouverte d'une couche de SiC et d'une couche de BN a été réalisé et étalonné à haute température jusqu'à 1200°C en plaçant le capteur entre deux blocs de carbone, en plaçant l'ensemble dans un four et en mesurant la température à l'aide d'un couple thermoélectrique.

La fiabilité des mesures obtenues grâce au capteur selon l'invention a été testée. Pour cela, on mesure la température d'un bloc d'alumine à l'aide de deux moyens de mesure : le capteur selon l'invention d'une part et un couple thermoélectrique d'autre part. On place le capteur et le thermocouple selon l'invention entre deux blocs d'alumine que l'on place dans un four. En reportant la température mesurée par le capteur en fonction de celle mesurée par le couple thermoélectrique, on observe une concordance satisfaisante des résultats (voir la figure 4). Sur cette figure 4, la courbe en trait plein représente la mesure obtenue à l'aide du capteur selon l'invention et la droite en traits discontinus représente la variation qui aurait dû être obtenue dans le cas d'un capteur « parfait », pour lequel la température mesurée aurait été égale à la température du couple thermoélectrique de référence. Le faible écart entre la courbe et la droite permet de montrer que le capteur selon l'invention est performant en terme d'exactitude des mesures par rapport à un couple thermoélectrique.

Bien que les capteurs selon l'invention puissent être utilisés à la température ambiante, les applications industrielles de ces capteurs concernent principalement le domaine des très hautes températures pour lesquelles il n'existe pas de capteur fiable de mesure par contact. Les secteurs concernés relèvent principalement de l'aéronautique (freinage, moteurs, turbines, tuyères) et du spatial (rentrée atmosphérique). Ils peuvent également concerner certaines filières de production d'énergie en cours de développement, comme les réacteurs de fusion contrôlée ou les centrales nucléaires à fission de quatrième génération. En d'autres termes, le capteur selon l'invention peut être utilisé dans tout domaine d'application où le problème du dimensionnement des structures à haute température est une préoccupation majeure.

D'autre part, un des avantages du capteur selon l'invention est que, comme les fibres carbone sont des constituants élémentaires de nombreux matériaux composites, il peut non seulement servir de capteur de mesure en étant intercalé entre deux pièces de matériaux à mesurer, mais il peut également être directement intégré aux matériaux à mesurer lors de la fabrication de ces matériaux, formant ainsi une partie de la structure des matériaux et permettant aussi de réaliser des mesures in situ, en phase d'utilisation, sans altérer les performances des matériaux.

## BIBLIOGRAPHIE

[1] J. ROGEZ, J. LE COZE, Mesure des températures, Techniques de l'Ingénieur, volume RC2, 1992, numéro R2515.

[2] G. BONNIER, H. RONSIN, Thermistances et autres thermomètres à semi-conducteurs, Techniques de l'Ingénieur, volume RC3, 1991, numéro R2580.

[3] C. LORETTE et al., Deposition and characterization of Hex-BN coating on carbon fibres using tris (dimethylamino)borane precursor, J. Eur. Ceram. Soc. (2006).

## Revendications

1. Procédé de fabrication d'un capteur (1) de température par contact destiné à être utilisé à une température d'utilisation $T_U$, ledit capteur (1) pouvant résister à une température supérieure à 800°C, le procédé comprenant les étapes suivantes :

   - fourniture d'une fibre de carbone de longueur L et de diamètre micrométrique,
   - traitement thermique de la fibre à une température $T_1$ supérieure à 800°C et supérieure à la température $T_U$ d'utilisation du capteur,
   et **caractérisé en ce que** le procédé comprend en outre les étapes suivantes :
   - dépôt pleine couche sur la fibre, à une température de dépôt $T_D$, d'une couche de revêtement en matériau céramique électriquement isolant et stable à la température d'utilisation $T_U$ du capteur, le matériau céramique étant choisi parmi la silice ($SiO_2$), le zircone ($ZrO_2$) et l'alumine ($Al_2O_3$),
   - traitement thermique de la fibre, revêtue de la couche de revêtement, à une température $T_2$ supérieure à la température de dépôt $T_D$ de la couche de revêtement et supérieure à la température d'utilisation $T_U$ du capteur.

2. Procédé de fabrication selon la revendication 1, dans lequel la température $T_1$ et la température $T_2$ sont

supérieures à une température $T_E$ dite « température limite d'étalonnage », ladite température limite d'étalonnage $T_E$ étant supérieure à la température $T_U$ d'utilisation du capteur.

3. Procédé de fabrication selon la revendication 1, dans lequel la température $T_1$ est supérieure à la température $T_2$.

4. Procédé de fabrication d'un capteur (1) de température par contact destiné à être utilisé à une température d'utilisation $T_U$, ledit capteur (1) pouvant résister à une température supérieure à 800°C, le procédé comprenant les étapes suivantes :

    - fourniture d'une fibre de carbone de longueur L et de diamètre micrométrique,
    - traitement thermique de la fibre à une température $T_1$ supérieure à 800°C et supérieure à la température $T_U$ d'utilisation du capteur,
    et **caractérisé en ce que** le procédé comprend en outre les étapes suivantes :
    - dépôt pleine couche sur la fibre, à une température de dépôt $T_{D1}$, d'une première couche de revêtement en carbure de silicium,
    - dépôt pleine couche sur la première couche de revêtement, à une température de dépôt $T_{D2}$, d'une seconde couche de revêtement en nitrure de bore,
    - traitement thermique de la fibre ainsi obtenue à une température $T_2$ supérieure aux températures de dépôts $T_{D1}$ et $T_{D2}$ et à la température d'utilisation $T_U$ du capteur.

5. Procédé de fabrication selon la revendication 4, dans lequel la température $T_1$ et la température $T_2$ sont supérieures à une température $T_E$ dite « température limite d'étalonnage », ladite température limite d'étalonnage $T_E$ étant supérieure à la température $T_U$ d'utilisation du capteur.

6. Procédé de fabrication selon la revendication 4, dans lequel la température $T_1$ est supérieure à la température $T_2$.

7. Procédé d'étalonnage du capteur obtenu selon l'une quelconque des revendications 1 à 6, comprenant le chauffage uniforme du capteur selon une rampe de température par passage d'un courant électrique dans la fibre du capteur jusqu'à atteindre une température limite d'étalonnage $T_E$, et la mesure simultanée de la température et de la résistance de la fibre du capteur à l'aide de moyens de mesure de manière à déterminer la fonction d'étalonnage $F_E$ reliant la température $T_C(K)$ du capteur à sa résistance électrique $R_C(\Omega)$ selon la formule $R_C(\Omega) = F_E.T_C(K)$, la température d'étalonnage $T_E$ étant supérieure à la température d'utilisation du capteur et inférieure aux températures de traitement thermique $T_1$ et $T_2$.

8. Procédé de mesure de la température d'un matériau à tester à l'aide d'un capteur de température par contact obtenu selon l'une quelconque des revendications 1 à 6, comprenant la mise en contact de la fibre du capteur avec une surface du matériau à tester, le chauffage de la fibre du capteur par l'intermédiaire dudit matériau à tester avec lequel la fibre est en contact et la mesure de la résistance $R_C$ de la fibre pour en déduire sa température $T_C$ via la fonction d'étalonnage $F_E$ du capteur déterminée selon le procédé d'étalonnage de la revendication 7.

9. Elément constitué d'un matériau solide, **caractérisé en ce qu'**il incorpore un capteur obtenu selon l'une quelconque des revendications 1 à 6, les extrémités (2) du capteur (1) étant accessibles de l'extérieur de l'élément de manière à pouvoir connecter le capteur à une source d'alimentation électrique.

**Claims**

1. Method for manufacturing a contact temperature sensor (1) intended to be used at a temperature of use $T_U$, said sensor (1) being able to withstand a temperature higher than 800°C, the method comprising the following steps:

    - supply of a carbon fiber of length L and of micrometric diameter,
    - heat treatment of the fiber at a temperature $T_1$ higher than 800°C and higher than the temperature $T_U$ of use of the sensor,
    and **characterized in that** the method further comprises the following steps:
    - full layer deposition on the fiber, at a deposition temperature $T_D$, of a coating layer of electrically insulating ceramic material and stable at the temperature of use $T_U$ of the sensor, the ceramic material being chosen among silica ($SiO_2$), zirconia ($ZrO_2$) and alumina ($Al_2O_3$),
    - heat treatment of the fiber, coated with the coating layer, at a temperature $T_2$ higher than the deposition temperature $T_D$ of the coating layer and higher than the temperature of use $T_U$ of the sensor.

2. Manufacturing method according to claim 1, wherein the temperature $T_1$ and the temperature $T_2$ are higher than a temperature $T_E$ known as "calibration limit temperature", said calibration limit temperature $T_E$ being higher than the temperature $T_U$ of use of the sensor.

3. Manufacturing method according to claim 1, wherein

the temperature $T_1$ is higher than the temperature $T_2$.

4. Method for manufacturing a contact temperature sensor (1) intended to be used at a temperature of use $T_U$, said sensor (1) being able to withstand a temperature higher than 800°C, the method comprising the following steps:

  - supply of a carbon fiber of length L and of micrometric diameter,
  - heat treatment of the fiber at a temperature $T_1$ higher than 800°C and higher than the temperature $T_U$ of use of the sensor,
  and **characterized in that** the method further comprises the following steps:
  - full layer deposition on the fiber, at a deposition temperature $T_{D1}$, of a first coating layer of silicon carbide,
  - full layer deposition on the first coating layer, at a deposition temperature $T_{D2}$, of a second coating layer of boron nitride,
  - heat treatment of the fiber thereby obtained at a temperature $T_2$ above the deposition temperatures $T_{D1}$ and $T_{D2}$ and the temperature of use $T_U$ of the sensor.

5. Manufacturing method according to claim 4, wherein the temperature $T_1$ and the temperature $T_2$ are higher than a temperature $T_E$ known as "calibration limit temperature", said calibration limit temperature $T_E$ being higher than the temperature $T_U$ of use of the sensor.

6. Manufacturing method according to claim 4, wherein the temperature $T_1$ is higher than the temperature $T_2$.

7. Method for calibrating the sensor obtained according to any of claims 1 to 6, comprising the uniform heating of the sensor according to a temperature ramp by passing an electrical current in the fiber of the sensor until a calibration limit temperature $T_E$ is attained, and the simultaneous measurement of the temperature and the resistance of the fiber of the sensor by means of measurement means so as to determine the calibration function $F_E$ linking the temperature $T_C(K)$ of the sensor to its electrical resistance $R_C(\Omega)$ according to the formula $R_C(\Omega) = F_E.T_C(K)$, the calibration temperature $T_E$ being higher than the temperature of use of the sensor and lower than the heat treatment temperatures $T_1$ and $T_2$.

8. Method for measuring the temperature of a material to be tested by means of a contact temperature sensor obtained according to any of claims 1 to 6, comprising bringing the fiber of the sensor into contact with a surface of the material to be tested, heating the fiber of the sensor by means of said material to be tested with which the fiber is in contact and measuring the resistance $R_C$ of the fiber to deduce its temperature $T_C$ via the calibration function $F_E$ of the sensor determined according to the calibration method of claim 7.

9. Element consisting of a solid material, **characterised in that** it incorporates a sensor obtained according to any of claims 1 to 6, the ends (2) of the sensor (1) being accessible from the exterior of the element so as to be able to connect the sensor to an electrical power source.

## Patentansprüche

1. Verfahren zur Herstellung eines auf Kontakt beruhenden Temperaturmeßfühlers ('Kontakt-Temperaturmeßfühlers') (1), der zur Verwendung bei einer Gebrauchs-bzw. Verwendungstemperatur $T_U$ bestimmt ist und einer Temperatur oberhalb 800°C widerstehen kann, wobei das Verfahren die folgenden Stufen umfaßt:

  - Bereitstellen einer Kohlenstofffaser der Länge L und mit einem Durchmesser im Mikrometerbereich,
  - Wärmebehandlung der Faser bei einer Temperatur $T_1$ oberhalb 800° C und oberhalb der Gebrauchs-bzw. Verwendungstemperatur $T_U$ des Meßfühlers;
  und **dadurch gekennzeichnet, daß** das Verfahren die folgenden Stufen außerdem umfaßt:
  - Abscheidung in voller ununterbrochener Schicht ('Vollschicht-Abscheidung') einer Überzugsschicht auf der Faser bei einer Abscheidungstemperatur $T_D$, wobei die Überzugsschicht aus einem elektrisch isolierenden und bei der Gebrauchs-bzw. Verwendungstemperatur $T_U$ des Meßfühlers stabilen Keramikmaterial besteht, das aus Siliziumoxyd ($SiO_2$), Zirkonoxyd ($ZrO_2$) und Aluniniumoxyd ($Al_2O_3$) gewählt ist,
  - Wärmebehandlung der mit der Überzugsschicht überzogenen Faser bei einer Temperatur $T_2$ oberhalb der Abscheidungstemperatur $T_D$ der Überzugsschicht und oberhalb der Gebrauchs-bzw. Verwendungstemperatur $T_U$ des Meßfühlers.

2. Herstellungsverfahren nach Anspruch 1, bei welchem die Temperatur $T_1$ und die Temperatur $T_2$ oberhalb einer als Grenz-Eichtemperatur $T_D$ bezeichneten Temperatur liegen, wobei diese Grenz-Eichtemperatur $T_E$ über der Gebrauchs-bzw. Verwendungstemperatur $T_U$ des Meßfühlers liegt.

3. Herstellungsverfahren nach Abspruch 1, bei welchem die Temperatur $T_1$ oberhalb der Temperatur

$T_2$ liegt.

4. Verfahren zur Herstellung eines auf Kontakt beruhenden TemperaturMeßfühlers ('Kontakt-Tenperaturmeßfühfers') (1), der zur Verwendung bei einer Gebrauchs-bzw. Verwendungstemperatur $T_U$ bestimmt ist und einer Temperatur oberhalb 800° C widerstehen kann, wobei das Verfahren die folgenden Schritte bzw. Etappen umfaßt:

- Bereitstellen einer Kohlenstofffaser mit der Länge L und mit einem Durchmesser im Mikrometerbereich,
- Wärmebehandlung der Faser bei einer Temperatur $T_1$ oberhalb 800° C und oberhalb der Gebrauchs-bzw. Verwendungstemperatur $T_U$ des Meßfühlers,
und **dadurch gekennzeichnet, daß** das Verfahren die folgenden Stufen bzw. Etappen außerdem umfaßt:
- Vollschicht-Abscheidung einer ersten Überzugsschicht aus Siliziumkarbid auf der Faser bei einer Abscheidungstemperatur $T_{D1}$,
- Vollschicht-Abscheidung einer zweiten Überzugsschicht aus Bornitrid auf der ersten Überzugsschicht bei einer Abscheidungstemperatur $T_{D2}$,
- Wärmebehandlung der so erhaltenen Faser bei einer Temperatur $T_2$ über den Abscheidungstemperaturen $T_{D1}$ und $T_{D2}$ und über der Gebrauchs- bzw. Verwendungstemperatur $T_U$ des Meßfühlers.

5. Herstellungsverfahren nach Anspruch 4, bei welcher die Temperatur T1 und die Temperatur $T_2$ über einer als Grenztemperatur für die Eichung ('Grenz-Eichtemperatur') bezeichneten $T_E$ liegen, wobei diese genannte Grenz-Eichtemperatur über der Begrauchs-bzw. Verwendungstemperatur $T_U$ des Meßfühlers liegen.

6. Herstellungsverfahren nach Anspruch 4, bei welcher die Temperatur $T_1$ über der Temperatur $T_2$ liegt.

7. Verfahren zum Eichen des gemäß einem der Ansprüche 1 bis 6 erhaltenen Meßfühlers, das Verfahren umfassend die gleichförmige Erhitzung des Meßfühlers gemäß einer Temperaturrampe bzw. einem Temperaturanstieg mittels Durchleiten eines elektrischen Stroms in der Faser bis zum Erreichen einer sogenannten Grenz-Eichtemperatur $T_E$, sowie ferner umfassend die gleichzeitige Messung der Temperatur und des Widerstands der Faser des Meßfühlers vermittels Meßmitteln dergestalt um die Eichfunktion $F_E$ zu bestimmen, welche die Temperatur $T_C$ (K) des Meßfühlers mit dem elektrischen Widerstand $R_C$ ($\Omega$) gemäß der Formel $R_C$ ($\Omega$) = $F_E$ . $T_C$ (K) verbindet, wobei die Eichtemperatur $T_E$ über der Gebrauchs- bzw. Verwendungstemperatur des Meßfühlers und unter den Wärmebehandlungs-Temperaturen $T_1$ und $T_2$ liegt.

8. Verfahren zum Messen der Temperatur eines zu testenden Materials mit Hilfe eines gemäß einem der Ansprüche 1 bis 6 erhaltenen Kontakt - Temperaturmeßfühlers, wobei das Verfahren umfaßt das In-Berührungskontakt-Bringen der Faser des Meßfühlers mit einer Oberfläche des zu testenden Materials, des weiteren umfaßt das Erhitzen der Faser des Meßfühlers vermittels des zu testenden Materials, mit welchem die Faser in Berührungskontakt steht, sowie weiter umfassend die Messung des Widerstands $R_C$ der Faser, um hieraus seine Temperatur $T_C$ über die nach dem Eichverfahren von Anspruch 7 bestimmte Eichfunktion $F_E$ des Meßfühlers zu ermitteln.

9. Aus einem Festkörpermaterial bestehendes Element, **dadurch gekennzeichnet, daß** es einen nach einem der Ansprüche 1 bis 6 erhaltenen Meßfühler enthält, wobei die Enden (2) des Meßfühlers (1) von außerhalb des Elements her zugänglich sind derart daß der Meßfühler mit einer elektrischen Speisestromquelle verbunden werden kann.

# FIG. 1

# FIG. 2

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 5248964 B

**Littérature non-brevet citée dans la description**

- **J. ROGEZ ; J. LE COZE.** *Mesure des températures, Techniques de l'Ingénieur,* 1992, vol. RC2
- **G. BONNIER ; H. RONSIN.** *Thermistances et autres thermomètres à semi-conducteurs, Techniques de l'Ingénieur,* 1991, vol. RC3
- **C. LORETTE et al.** Deposition and characterization of Hex-BN coating on carbon fibres using tris(dimethylamino)borane precursor. *J. Eur. Ceram. Soc.,* 2006